# EUROPEAN PATENT SPECIFICATION

(11) **EP 3 006 176 B1**
(45) Date of publication and mention of the grant of the patent: **16.01.2019**
(21) Application number: 15186713.2
(22) Date of filing: 24.09.2015
(51) Int. Cl.: B28D 1/14, B23C 3/02, B28D 1/18, B24B 19/00, B24D 5/14, B24D 7/14

(54) **DEVICE AND METHOD FOR FORMING A HOLE THROUGH A GLASS PLATE**
VORRICHTUNG UND VERFAHREN ZUR FORMUNG EINES LOCHS DURCH EINE GLASPLATTE
DISPOSITIF ET PROCÉDÉ DE FORMATION D'UN TROU À TRAVERS UNE PLAQUE DE VERRE

(30) Priority: 10.10.2014 IT TO20140813
(43) Date of publication of application: 13.04.2016
(73) Proprietor: Biesse S.p.A., 61122 Chiusa di Ginestreto (Pesaro Urbino) (IT)
(72) Inventor: GENNARI, Gianluca, I-61122 Chiusa di Ginestreto (Pesaro Urbino) (IT); LONGATO, Roberto, I-61122 Chiusa di Ginestreto (Pesaro Urbino) (IT); BELLI, Marco, I-61122 Chiusa di Ginestreto (Pesaro Urbino) (IT)
(74) Representative: Notaro, Giancarlo

(56) References cited:
- EP-A1- 0 242 174
- WO-A1-2011/016299
- WO-A1-2012/029666
- WO-A1-2014/147327
- FR-A1- 2 969 017
- FR-A1- 2 975 027
- US-A- 5 653 627
- US-A1- 2006 093 446

## Description

The present invention relates to devices and methods for forming holes through glass plates. In particular the invention relates to devices of the type comprising a drilling tool having an axis and an abrasive front surface, and a control device for controlling a rotation of the drilling tool around its axis and for simultaneously moving said drilling tool in the direction of said axis against and through a glass plate, so as to form a hole through the glass plate.

Drilling devices of the above indicated type are disclosed for example in WO 2012/029666 A1 and JP 2009-256113.

The conventional art which is adopted in performing drilling operations on glass plates provides for the engagement of two drilling tools against the two opposite faces of the glass plate. A first tool initiates the drilling operation by penetrating into the plate through a portion of the thickness of the plate. A second drilling tool completes the operation by engaging the opposite face of the plate until it projects into the hole portion which has been formed on the opposite side. The adoption of this conventional technique implies the use of dedicated devices and machines, with the resulting need of transferring thereon the plates to be subjected to the drilling operation. This involves losses of time in the processing cycle of the plates and requires the provision of additional equipment and space within the production plant.

It would be instead desirable to have a device for drilling glass plates which is able of forming a hole into a glass plate by operating only on one side of the plate, since in this manner the production equipment would be greatly simplified and in particular the drilling operations could be performed also for example on a same electronically controlled (CNC) machining center where also cutting and machining operations of the plate can be previously performed.

However, forming a hole into a glass plate by operating with a drilling tool only on one side of the plate is a problem that heretofore has not been solved satisfactorily, because of the fragility of glass and the resulting inevitable formation of cracks and ruptures of the glass adjacent to the hole edge.

A device according to the preamble of claim 1 is known from FR 2 975 027 A1**. Other similar devices are known from** US 2006/0093446 A1 **and** WO 2011/016299 A1**. A device of this type is also known from** WO 2014/147327 A1 in relation to ophthalmic lenses.

The object of the present invention is that of solving the above indicated technical problem in a simple and efficient manner, by providing a device and a method for drilling glass plates, as well as a drilling tool, adapted to form a hole into a glass plate by engaging the plate only from one side and with a very reduced risk, or no risk at all, of damaging the plate.

In view of achieving this object, the invention provides a device having the features of claim 1, and a method having the features of claim 4.

Studies and tests conducted by the applicant have shown that, due to the above indicated features, the risk of damaging the glass plate adjacent to the hole edge following the engagement of the drilling tool through the plate is reduced to a minimum.

A further advantage deriving from the above indicated features lies in that the drilling tool can be disengaged from the glass plate by a rearward axial movement, with no risk of interference of the tool with the wall of the hole formed into the plate, since due to the above described planetary movement, the diameter of the hole formed within the plate can be substantially greater than the maximum diameter of the tool.

According to the invention, the above indicated drilling tool also has an abrasive front surface having a substantially spherical shape.

According to the invention, the device used for performing the drilling operation is also an electronically controlled (CNC) machining center of the type having a work surface, a working head movable along three mutually orthogonal directions above the work plane and provided with a motorized spindle carrying said drilling tool and adapted to rotate the drilling tool around its axis, and an electronic control unit which can be programmed for controlling the movements of the work head along said three orthogonal axes. According to the invention, the above mentioned axial movement of the drilling tool is obtained by the movement of the working head along one of said three orthogonal axes (typically the vertical axis) and the planetary movement of the drilling tool is obtained by coordinated movements of the working head along the two remaining axes.

Owing to the invention, it is therefore possible to use a CNC machining center for performing both cutting and processing operations on a plate positioned horizontally above the work surface, and drilling operations on the plate, by engaging the glass plate only on the upper side thereof. Any need of providing dedicated equipment for performing the drilling operations is thus eliminated. Dead times necessary for transferring the glass plate from the machining center to a machine dedicated to the drilling operation are also eliminated and the space occupied in the plant is reduced while the productivity of the plant itself is increased.

According to the invention, the axial stem of the drilling tool also has an abrasive surface, which however has a grain size which is smaller than that of the front surface of the tool, said stem being adapted to be engaged against the surface of the hole in the glass plate after that it has been obtained, in order to enlarge the diameter of the hole. Therefore, the drilling tool according to the invention is used in a first stage by imparting thereto the helical movement which has been described above, in order to obtain a through hole in the plate. In a second stage, the same tool can be left engaged through the hole and used for performing the milling operation on the hole wall so as to obtain the desired final value of the hole diameter. In this stage, the tool is imparted with the movement of rotation around its axis and the planetary movement around an axis parallel and spaced apart from the tool axis, without changing the axial position of the tool, so as to perform milling of the wall of the hole.

Providing this milling operation subsequent to forming the through hole has of course the advantage of eliminating any cracked portions of the glass plate (if they occur) which are formed adjacent to the wall of the hole following the first drilling operation.

At any rate, it is not excluded that the milling operation during the second processing stage is carried out, if preferred, by a tool different from that used during the first stage.

According to a preferred embodiment, the above mentioned axial stem has its opposite ends connected by substantially conical surfaces to an end bulb and a base portion of the tool body. These substantially conical surfaces are also abrasive surfaces and are used for engaging the end edges of the hole formed into the glass plate, in order to form respective circumferential chamfered edges at the ends of the hole.

Further features and advantages of the invention will became apparent from the description which follows with reference to the annexed drawings, given purely by way of non limiting example, in which:
- figure 1 is a diagrammatic perspective view of a CNC machining center, of a conventional type used for processing glass plates,
- figure 2 is a view in a longitudinal cross-section of a preferred embodiment of a drilling tool according to the invention,
- figure 3 is a view at an enlarged scale of a detail of figure 2,
- figure 4 is a perspective view, partially in cross-section of the drilling tool of figure 2, and
- figures 5-10 are diagrams which show the different stages of the method according to the invention, for forming a hole through a glass plate.

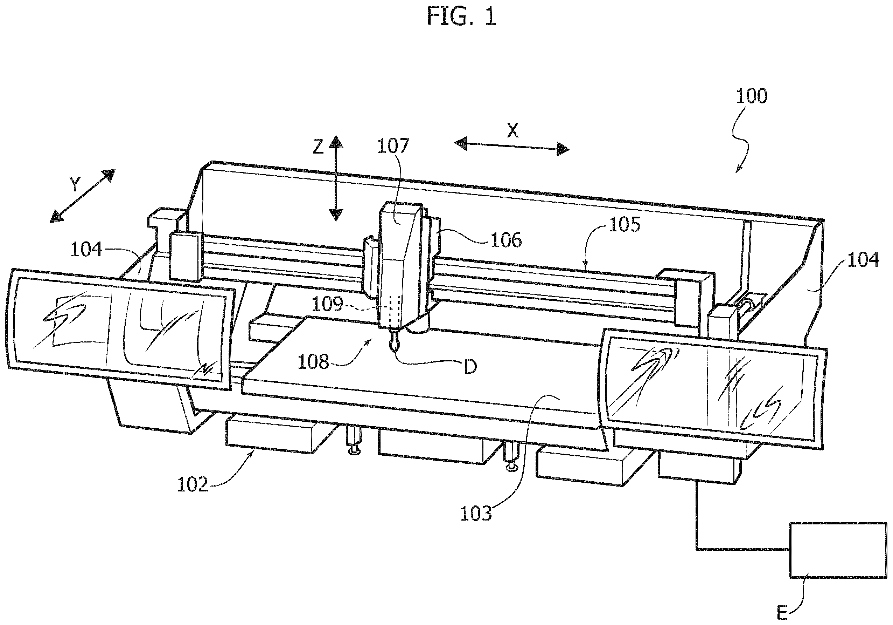

As already indicated in the foregoing, a relevant advantage of the present invention lies in that it renders possible to form a hole through a glass plate by engaging the plate only from one side. As a result of this, the invention is applicable for example also in a CNC machining center of the conventional type shown in figure 1, in which a glass plate is supported horizontally above a work surface. Naturally, however, as it will be indicated also in the following, the present invention is of a general application and can be used in any type of machine or apparatus, with the plate oriented in any way.

Coming now to figure 1, a CNC machining center 100 of a type which has been marketed by the applicant since long has been shown therein purely by way of example. Machining center 100 comprises a fixed structure 102 with a work surface 103 on which a working head 108, carrying a tool D, is movable along three mutually orthogonal directions X,Y,Z. In particular, the working head 108 is movable vertically together with a slide 107 which is slidably mounted along direction Z on a carriage 106. Carriage 106 is movable along direction X on a cross-member 105. Cross-member 105 has its ends mounted movable along direction Y on two side portions 104 of the fixed structure of the machine.

Head 108 includes a motorized spindle 109 whose lower end is provided with a quick coupling device (not shown in the drawings) for connection of a tool D. The movements of slide 107 along the vertical direction Z, of carriage 106 along direction X and of cross-member 105 along direction Y are controlled by an electronic unit E which can be programmed so as to have a predetermined work cycle performed by the machine.

During the work cycle, the head 108 attends by itself to replacing the tool, depending upon the type of operation to be carried out. Machining centers of this type include in general a tool magazine (not shown in figure 1). Any time the tool mounted on the working head 108 must be changed in order to perform a different operation and/or due to wear of the tool, the control unit E controls a movement of head 108 towards the tool magazine and also controls the tool coupling device carried by the spindle 109 in order to deposit the previously used tool into an empty position of the magazine and to pick up a new tool to be used at another position of the magazine.

The glass plate on which the work cycle must be carried out is positioned horizontally above the work surface 103, typically with the aid of locking supports which are provided by the operator on the work surface 103 depending upon the shape and the size of the glass plate. Each of these locking supports (not shown in figure 1) includes a lower suction cup which can be activated by vacuum, in order to cause the support to be held attached to the work surface 103, as well as an upper suction cup, which also can be activated by vacuum, for engaging the lower surface of the glass plate and for holding the latter above the support and hence at a fixed position with respect to the work surface 103.

All the above indicated details are not shown in the annexed drawings, both because they can be made in any known way, and because they do not fall, taken alone, within the scope of the present invention. Also, the elimination of these details from figure 1 renders the latter simpler and easier to understand. As already indicated, moreover, the machining center of figure 1 is illustrated herein only for showing an example of a particularly advantageous application of the principles of the present invention, while it must be understood that the invention is of general applicability, as it will become apparent from the following description.

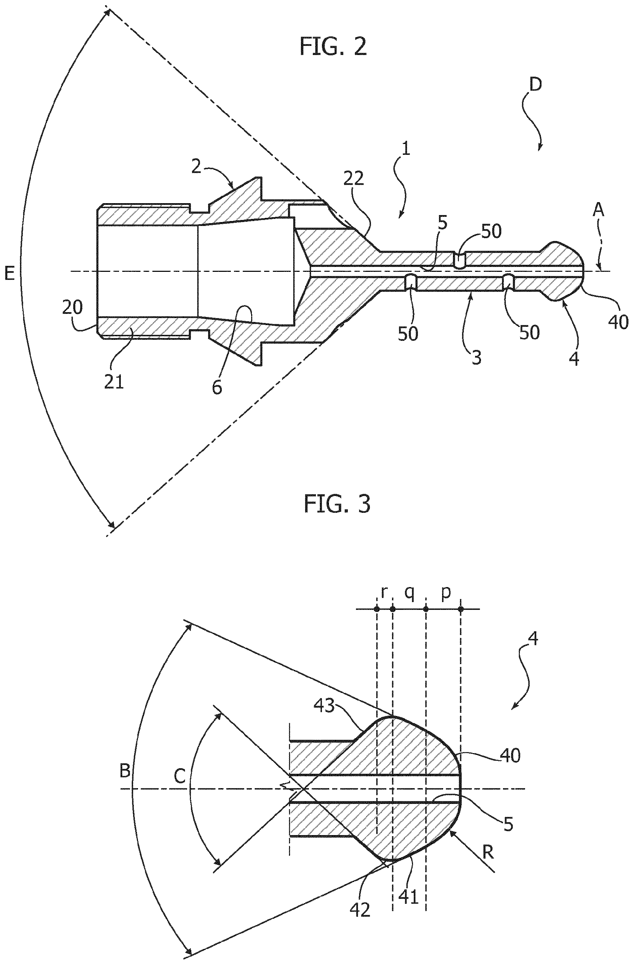

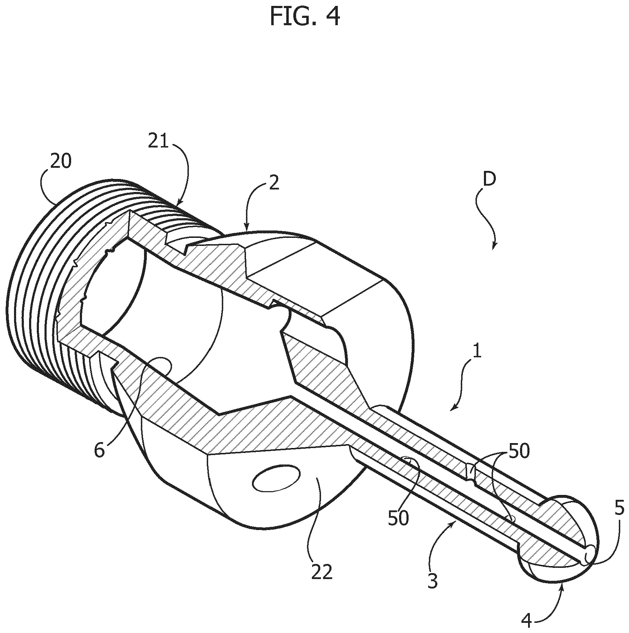

Coming now to figures 2-4, the invention enables the use of the head 108 of the machining center 100 for performing drilling operations on the glass plate positioned above the work surface 103.

In these figures, reference D generally designates a drilling tool having a body 1 with a base portion 2 from which there extends an axial stem 3 ending with an enlarged end bulb 4.

Body 1 has an axis A and is traversed by an axial hole 5 having one end opening out on the front surface 40 of the end bulb 4, the opposite end of hole 5 opens out in a cavity 6 formed within the base portion 2 of the body of the tool, starting from the end surface 20 located on the opposite side with respect to the end bulb 4. The base portion 2 is provided with a threaded cylindrical tang 21 for coupling with a tool-carrying body (not shown) which on its turn is coupled with the spindle 109 of the machine. In the installed condition on the machine, the hole 5 and the cavity 6 communicate with a system for supplying cooling fluid, the cooling fluid being supplied continuously to tool D during the processing operation. The cooling fluid comes out from hole 5 at the end located at the front surface 40 of the end bulb 4, as well as from radial holes 50 communicating with the axial hole 5 and opening out on the surface of stem 3.

With reference to the detail at an enlarged scale of figure 3, the front surface 40 of the end bulb 4 has a portion of spherical shape, having a ray R and an axial dimension p. This front portion with spherical shape is connected to a conical surface portion, extending axially through a distance q and having a total cone angle B. Adjacent to the conical surface portion 41, a connecting portion 42 is provided having an axial dimension r and followed by a substantially conical portion 43 having an opposite conicity with respect to that of portion 41 and a total cone angle which is designated by C in figure 3. Also with reference to figure 2, the axial stem 3 has its surface which at a first end is connected through the conical portion 43 to the front surface of bulb 4 and an opposite end which is adjacent to a conical front portion 22 of the base portion 2 of the tool body. This conical portion 22 has a total cone angle which is designated by E in figure 2.

The body 1 of tool D is constituted of steel and has its outer surface, extending from the conical portion 22 to the end bulb 4, ends included, which is an abrasive surface obtained by any known technique, for instance by application of natural or synthetic diamond fragments. According to the invention, the grain size of the abrasive surface at the axial stem 3 and at the conical portions 43 and 22 is smaller than that at the spherical front surface 40.

It is well understood that a first important feature of the drilling tool according to the invention lies in the spherical shape, or even only the substantially spherical shape of the front surface 40. The provision of an abrasive surface also on the axial stem 3 (whose function will become apparent in the following) represents an additional feature of the tool according to the invention which is only preferred. Also simply preferred is the further feature consisting in that the grain size of the abrasive surface at the axial stem 3 is different (smaller) with respect to that of the front surface 40. Finally, also the provision of the conical abrasive portions 43, 22, whose function will also be illustrated in the following, is to be understood as a further optional feature which is particularly preferred.

Studies and tests of the applicant have shown that, in order to provide the best performance in the drilling operation which is described herein, it is particularly advantageous that the cone angle B is between 10° and 80°, the value of 50° being the optimum. It is also advantageous that the cone angle C and the cone angle E are between 40° and 140°, the value of 90° being the optimum.

The radius R of the front conical portion 40 can be selected depending upon the diameter of the hole which must be drilled into the glass plate and depending upon the characteristics of the drilling operation, as it will become apparent from the following description.

The grain size of the abrasive surface at the front surface 40 is preferably between D46 and D852 (in DIN units), the value D301 being the optimum. The grain size on the surface of the axial stem 3 and the conical surfaces 43, 22 is also between D852 and D46, but once the value of the grain size of the front surface 40 is selected, the grain size of the surface of the axial stem 3 and the conical surfaces 43, 22 has anyway a lower value, the optimum value being around D126.

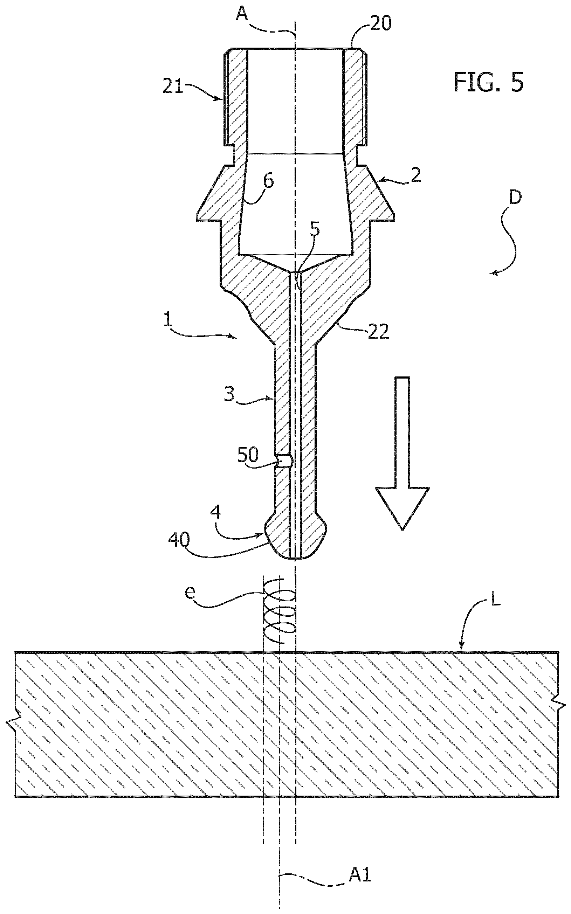

The drilling method according to the invention will be described with reference to figures 5-10 of the annexed drawings. In these figures, the various parts of the drilling tool are designated by the same reference numerals used in figures 2-4.

In the method according to the invention, a drilling tool D is engaged above and through a glass plate L by placing tool D in rotation around its axis A and simultaneously imparting the tool D with a planetary movement around a central axis A1 which is parallel and spaced apart from axis A, as well as an advancing movement along the direction of axis A. Therefore, the tool D moves through the plate L by rotating around its axis A and simultaneously performing a helical movement. In figure 5 there is diagrammatically shown and indicated by "e" the helical path followed by the central point located at the tip of the front surface 40 of the tool, this helical path having a diameter which is the double of the distance between axes A,A1. The drilling operation is performed by holding the tool D with its axis A orthogonal to plate L.

In the case the tool is used in a machine of the type described above with reference to figure 1, the advancing movement of the tool D along axis A is obtained by the movement of slide 107 along the direction of the vertical axis Z. At the same time, the planetary movement of the tool D around the central vertical axis A1 is obtained, again in the case of the example of figure 1, by coordinated movements of carriage 106 along the direction of axis X and the cross-member 105 along the direction of axis Y, so as to generate the desired planetary movement. These coordinated movements are obtained through the control program provided in the electronic unit E. At the same time, again in the case of the example of figure 1, the rotation of tool D around its axis A is obtained through the motorized spindle 109.

Figure 5 shows the tool D just before that it enters into contact with the upper surface of the glass plate L. Again, the plate L is shown in figures 5-10 in a horizontal position, with reference to the exemplary application shown in figure 1, in which the plate L is positioned on the work surface 103 and the drilling tool D is oriented vertically. However, it is not excluded that the teaching of the present invention is applied to a machine dedicated to the drilling operation, in which case the plate L could have any orientation for which the machine is adapted (such as also a vertical orientation) while it is clearly understood that the drilling tool is preferably oriented with its axis orthogonal to the plate.

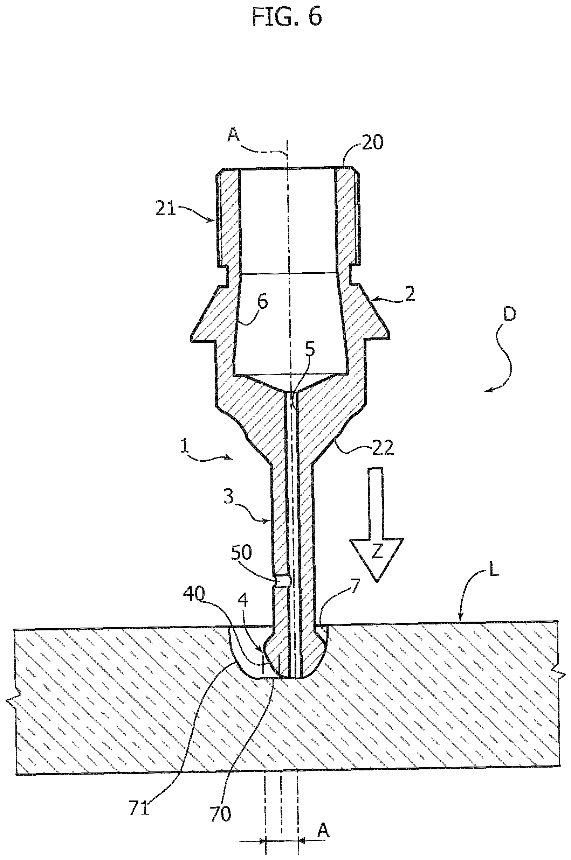

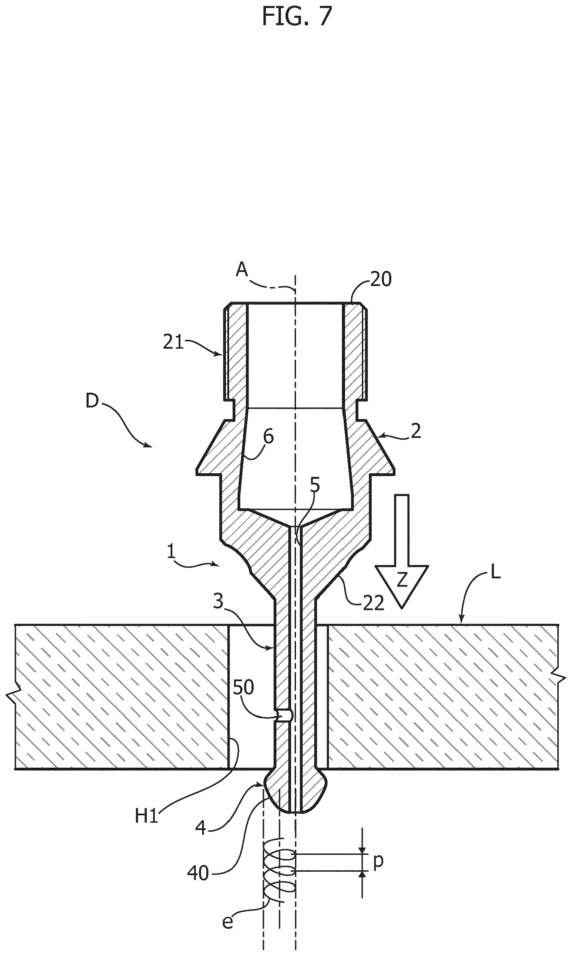

Figure 6 shows the drilling tool after that it has penetrated already partially through the glass plate L, forming a cup-shaped cavity, designated by 7, which has a bottom surface which, due to the helical movement imparted to the tool, includes a central portion 70 which is substantially planar, connected to a peripheral portion 72 of substantially spherical shape. By continuing the process, tool D comes to pass completely through the glass plate L so as to form a cylindrical hole H1 (figure 7) through the plate. Also in this stage, the tool continuous to be moved according to a helical movement e, with a pitch p as shown in figure 7. This pitch is selected depending upon the characteristics of the material and the operation, by adjusting both the speed of forward movement of the tool in the direction of axis A, and of course also the rotational speed of tool D around axis A and the speed of the planetary revolution of the tool around the central axis A1.

Naturally, during the above described operation, cooling fluid continues to be supplied into axial hole 5 of the tool so that it comes out from the tool both at the front surface 40 and at the radial holes 50.

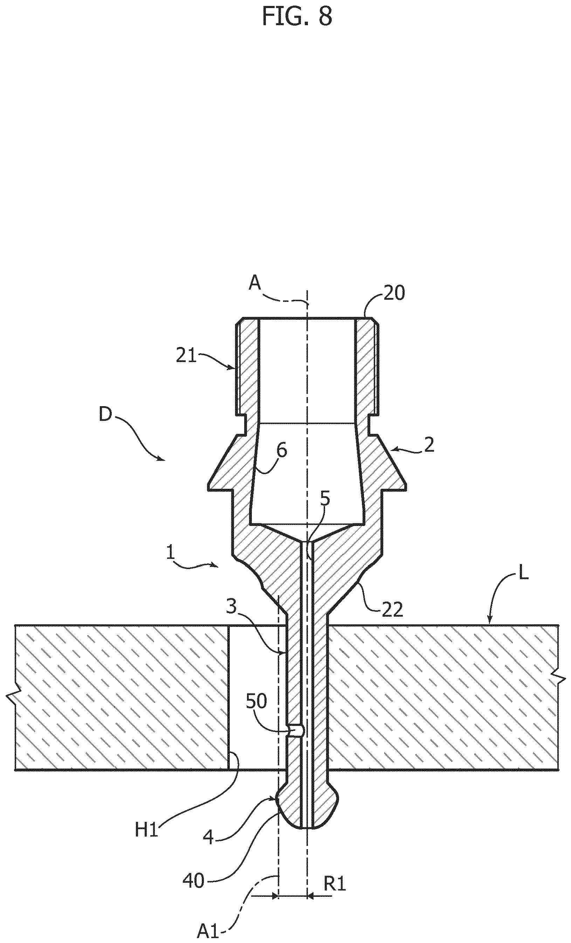

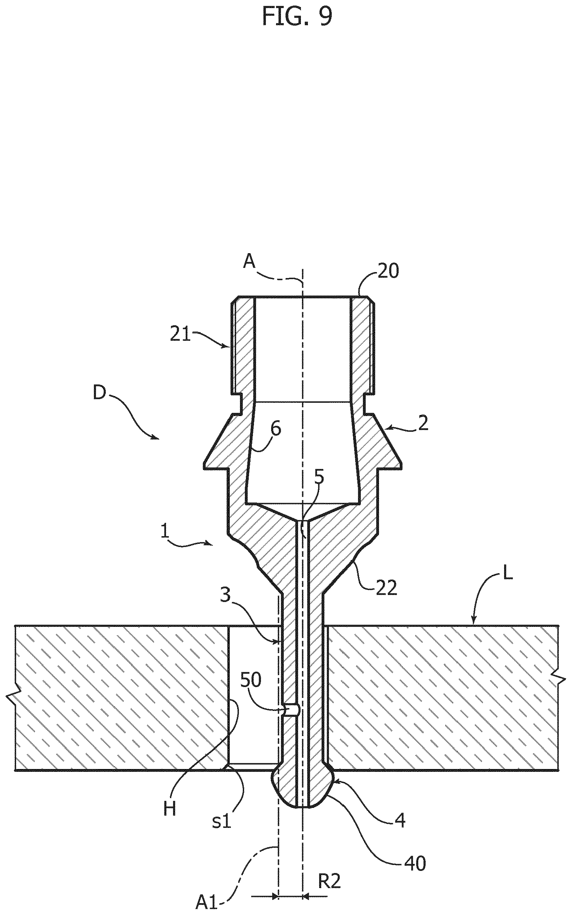

Hole H1 formed at the end of the stage shown in figure 7 is preferably a hole having a diameter lower than the final desired diameter. According to the invention it is indeed preferred to carry out a second processing stage in which the wall of the hole H1 as initially obtained is milled to enlarge its diameter until reaching the final desired diameter value. Again according to a further preferred feature, this second processing stage is carried out by the same drilling tool D, by exploiting for this purpose the abrasive surface with smaller grain size provided along the axial stem 3 of the tool. As visible in figure 8, this processing operation is carried out by engaging the axial stem 3 against the wall of hole H1. In this stage, the tool is held at a fixed axial position and is rotated around its axis A, while also its planetary movement is maintained. The radius R1 of this planetary movement (figure 8) is progressively increased so as to progressively obtain the enlargement of a hole H1 until obtaining the final hole H (figure 9).

In the case of the exemplary embodiment shown with reference to figure 1, all the above mentioned coordinated movements of the tool are obtained by correspondingly programming the electronic control unit E.

The advantage of performing the second processing stage shown in figure 8 lies in that in this manner any damaged parts of the glass which may be created adjacent to hole H1 following the drilling operation are thereby removed.

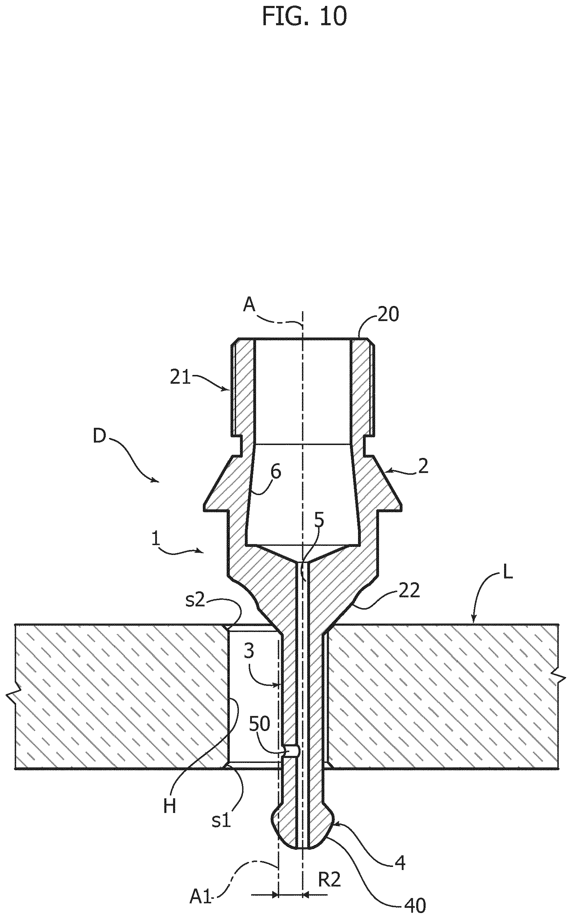

Figures 9,10 show two further stages of the process, in which the abrasive conical portions 43,22 of the tool body are subsequently brought to the end edges of the hole H formed in glass plate L in order to obtain chamfered end edges. These processing operations are performed by holding the tool D at a predetermined axial position and imparting the tool both with a rotational movement around its axis A and with a revolution planetary movement around axis A1 of hole H with a required radius R2. At the end of these operations, a hole is obtained having the required characteristics with regard to dimensions, shape and surface quality.

As it is clearly apparent from the foregoing description, the main advantage of the present invention is that of enabling the drilling of holes through glass plates by engaging the plates only from one side while nevertheless reducing to a minimum, or eliminating completely, the risk of damage of the glass adjacent to the wall of the finally obtained hole.

This possibility opens the way to various applications, of which the application to a machining center as shown in figure 1 represents only an example.

As already indicated in the foregoing, although the preferred embodiment of the drilling tool according to the invention provides that the tool is used both in a first drilling stage and in a second milling stage of the wall of the initially obtained hole, it is also possible, but not according to the invention, that the two stages of the process are carried out by two different tools. Moreover, as already indicated above, the above described drilling tool, of which the annexed drawings show merely an exemplary embodiment, can be used according to the modes described herein, also in machines completely different from that of figure 1 and in particular also in machines in which the orientation of the glass plate is not horizontal and the orientation of the tool is consequently not vertical.

Also an application is not excluded wherein the tool is held with its axis not exactly orthogonal to the plane of the glass plate.

Naturally, while the principle of the invention remains the same, the details of construction and the embodiments may widely vary with respect to what has been described and illustrated purely by way of example, without departing from the scope of the present invention as defined by the claims.

## Claims

1. Device for forming a hole (H) through a glass plate (L), comprising a drilling tool (D) having an axis (A), and a control device (105, 106, 107, 109, E) for controlling a rotation of the drilling tool (D) around its axis (A) and for simultaneously moving said drilling tool (D) in the direction of said axis (A) against and through said glass plate (L), so as to form a hole (H) through the glass plate (L),
said control device (105, 106, 107, 109, E) being configured for imparting said drilling tool (D) also with a planetary movement around a main axis (A1) parallel and spaced apart from the axis (A) of the drilling tool (D),
so that said drilling tool (D) is able to advance progressively through the glass plate (L) during drilling of the hole by rotating around its axis (A) and at the same time performing a helical movement resulting from the sum of said axial movement and said planetary movement around said main axis (A1),
wherein:
- said drilling tool (D) has an axial stem (3) and an abrasive front surface (40),
- said axial stem (3) also has an abrasive surface, having however a grain size smaller than that of the front surface (40) of the drilling tool (D), said axial stem (3) being adapted to be engaged against the surface of the hole (H1) in the glass plate (L) after that the hole has been obtained, in order to enlarge the diameter of the hole,
said device being **characterized in that**:
- said abrasive front surface (40) has a substantially spherical shape,
- said control device (105, 106, 107, 109, E) includes an electronic control unit (E) programmed for imparting the drilling tool (D) with a pulsed axial movement through the glass plate, comprising a succession of forward movements alternated with stops and/or rearward movements, and **in that** said device is an electronically controlled machining center (100) comprising:
- a work surface (103),
- a working head (108) movable along three mutually orthogonal directions (X, Y, Z) above the work surface (103),
- a motorized spindle (109) provided on the work head (108) and carrying said drilling tool (D), for rotating the drilling tool (D) around its axis (A), and
- an electronic control unit (E) which can be programmed for controlling the movements of the working head (108) along said three orthogonal axes (X, Y, Z),
- said device being further **characterized in that** said axial movement of the drilling tool (D) is obtained by movement of said working head (108) along one (Z) of said three orthogonal axes (X, Y, Z,) and the planetary movement of the drilling tool (D) is obtained by coordinated movements of the working head (108) along the remaining two axes (X, Y) of said three orthogonal axes.

2. Device according to claim 1 , **characterized in that** said axial stem (3) of the drilling tool (D) has an end bulb (4) which defines said abrasive front surface (40).

3. Device according to claim 2, **characterized in that** said axial stem (3) has its opposite ends connected by substantially conical surfaces (43, 22) to said end bulb (4) and to a base portion (2) of the tool body, and **in that** said substantially conical surfaces (43, 22) are also abrasive surfaces and are engageable against the end edges of the hole (H) for forming respective chamfered edges (S1, S2).

4. Method for forming a hole (H) through a glass plate (L) with the aid of a drilling tool (D) having an axis (A), in which the drilling tool (D) is rotated around its axis (A) and simultaneously moved in the direction of said axis (A) against and though said glass plate (L), so as to form a hole (H) through said glass plate (L),
wherein said drilling tool (D) has an axial stem (3) having an end bulb (4) which defines said abrasive front surface (40) which is used for forming the hole and in that said axial stem (3) also has an abrasive surface, which however has a grain size smaller than that of the front surface (40) of the drilling tool (D),
wherein said drilling tool (D) is imparted with a planetary movement around a main axis (A1) parallel and spaced apart from the axis (A) of the drilling tool (D),
so that said drilling tool (D) advances progressively through the glass plate (L) during forming of the hole, by rotating around its axis (A) and at the same time performing a helical movement resulting from the sum of said axial movement and said planetary movement around said main axis (A1),
wherein subsequently to forming of the hole (H1) the latter is enlarged by a further milling operation of the wall of the hole said milling operation being performed using said axial stem (3) of the tool (D),
said method being **characterized in that**:
said drilling tool (D) has a front abrasive surface (40) which has a substantially spherical shape,
**in that** the drilling tool (D) is imparted also with a pulsed axial movement through the glass plate (L), comprising a succession of forward movements alternated to stops in the forward movement and/or to rearward movements, and
**in that** said drilling tool (D) is associated to a motorized spindle (109) of a working head (108) of an electrically controlled machining center (100), wherein the working head (108) is movable along three mutually orthogonal directions (X, Y, Z) so that said axial movement of the drilling tool (D) is obtained by movement of said working head (108) along one (Z) of said three orthogonal axes (X, Y, Z) and the planetary movement of the drilling tool (D) is obtained by coordinated movements of the working head (108) along the remaining two axes (X, Y) of said three orthogonal axes.

## Patentansprüche

1. Vorrichtung zur Formung eines Lochs (H) durch eine Glasplatte (L), wobei die Vorrichtung ein Bohrwerkzeug (D), das eine Achse (A) besitzt, sowie eine Steuervorrichtung (105, 106, 107, 109, E) umfasst, um eine Drehung des Bohrwerkzeugs (D) um seine Achse (A) zu steuern und das Bohrwerkzeug (D) gleichzeitig in Richtung dieser Achse (A) gegen und durch die Glasplatte (L) zu bewegen, um durch die Glasplatte (L) ein Loch (H) auszuformen,
wobei die Steuervorrichtung (105, 106, 107, 109, E) so ausgebildet ist, dass sie dem Bohrwerkzeug (D) auch eine Planetenbewegung um eine Hauptachse (A1) aufprägt, die parallel zur Achse (A) des Bohrwerkzeugs (D) liegt und von dieser beabstandet ist,
so dass sich das Bohrwerkzeug (D) fortschreitend durch die Glasplatte (L) vorschiebt, während das Loch gebohrt wird, indem sich das Werkzeug um seine Achse (A) dreht und gleichzeitig eine schraubenförmige Bewegung aufgrund der Überlagerung der axialen Bewegung und der Planetenbewegung um die Hauptachse (A1) ausführt,
wobei:
- das Bohrwerkzeug (D) einen axialen Schaft (3) sowie eine abrasive Stirnfläche (40) besitzt,
- der axiale Schaft (3) weiters eine abrasive Oberfläche besitzt, die jedoch eine Körnung besitzt, die kleiner als die Körnung der Stirnfläche (40) des Bohrwerkzeugs (D) ist, wobei der axiale Schaft (3) so ausgebildet ist, dass er gegen die Oberfläche des Lochs (H1) in der Glasplatte (L) in Eingriff gebracht werden kann, nachdem das Loch ausgebildet wurde, um den Durchmesser des Lochs zu vergrößern,
wobei die Vorrichtung **dadurch gekennzeichnet ist, dass**:
- die abrasive Stirnfläche (40) im Wesentlichen kugelförmig ausgeformt ist,
- die Steuervorrichtung (105, 106, 107, 109, E) eine elektronische Steuereinheit (E) aufweist, die so programmiert ist, dass sie dem Bohrwerkzeug (D) eine gepulste axiale Bewegung durch die Glasplatte aufprägt, die eine Folge von Vorwärtsbewegungen umfasst, die sich mit einem Anhalten und/oder mit Rückwärtsbewegungen abwechseln,
und dass die Vorrichtung ein elektronisch gesteuertes Bearbeitungszentrum (100) ist, das umfasst:
- eine Arbeitsfläche (103),
- einen Arbeitskopf (108), der über der Arbeitsfläche (103) entlang von drei zueinander orthogonalen Richtungen (X, Y, Z) bewegt werden kann,
- eine motorgetriebene Spindel (109), die auf dem Arbeitskopf (108) vorgesehen ist und das Bohrwerkzeug (D) trägt, um das Bohrwerkzeug (D) um seine Achse (A) in Drehung zu versetzen, sowie
- eine elektronische Steuereinheit (E), die so programmiert werden kann, dass sie die Bewegungen des Arbeitskopfs (108) entlang der drei orthogonalen Achsen (X, Y, Z) steuert,
- wobei die Vorrichtung weiters **dadurch gekennzeichnet ist, dass** die axiale Bewegung des Bohrwerkzeugs (D) dadurch erreicht wird, dass der Arbeitskopf (108) entlang einer Achse (Z) der drei orthogonalen Achsen (X, Y, Z) bewegt wird, wobei die Planetenbewegung des Bohrwerkzeugs (D) durch koordinierte Bewegungen des Arbeitskopfs (108) entlang der übrigen beiden Achsen (X, Y) der drei orthogonalen Achsen erreicht wird.

2. Vorrichtung gemäß Anspruch 1, **dadurch gekennzeichnet, dass** der axiale Schaft (3) des Bohrwerkzeugs (D) eine Enderweiterung (4) besitzt, die die abrasive Stirnfläche (40) bildet.

3. Vorrichtung gemäß Anspruch 2, **dadurch gekennzeichnet, dass** die entgegengesetzten Enden des axialen Schafts (3) mit im Wesentlichen konischen Oberflächen (43, 22) der Enderweiterung (4) sowie mit einem Basisteil (2) des Werkzeugkörpers verbunden sind, und dass die im Wesentlichen konischen Oberflächen (43, 22) ebenfalls abrasive Oberflächen sind und gegen die Endkanten des Lochs (H) in Eingriff gebracht werden können, um entsprechend abgeschrägte Kanten (S1, S2) auszubilden.

4. Verfahren zur Formung eines Lochs (H) durch eine Glasplatte (L) mithilfe eines Bohrwerkzeugs (D), das eine Achse (A) besitzt, wobei das Bohrwerkzeug (D) um seine Achse (A) in Drehung versetzt und gleichzeitig in der Richtung dieser Achse (A) gegen und durch die Glasplatte (L) bewegt wird, um durch die Glasplatte (L) ein Loch (H) auszuformen,
wobei das Bohrwerkzeug (D) einen axialen Schaft (3) besitzt, der eine Enderweiterung (4) besitzt, die die abrasive Stirnfläche (40) bildet, die zum Ausformen des Lochs verwendet wird, und dass der axiale Schaft (3) weiters eine abrasive Oberfläche besitzt, die jedoch eine Körnung besitzt, die kleiner als die Körnung der Stirnfläche (40) des Bohrwerkzeugs (D) ist,
wobei dem Bohrwerkzeug (D) eine Planetenbewegung um eine Hauptachse (A1) aufgeprägt wird, die parallel zur Achse (A) des Bohrwerkzeugs (D) liegt und von dieser beabstandet ist,
so dass sich das Bohrwerkzeug (D) fortschreitend durch die Glasplatte (L) vorschiebt, während das Loch ausgeformt wird, indem sich das Werkzeug um seine Achse (A) dreht und gleichzeitig eine schraubenförmige Bewegung aufgrund der Überlagerung der axialen Bewegung und der Planetenbewegung um die Hauptachse (A1) ausführt,
wobei das Loch (H1), nachdem ausgeformt wurde, dadurch erweitert wird, dass die Wand des Lochs mit einem weiteren Schleifvorgang geschliffen wird, wobei der Schleifvorgang unter Verwendung des axialen Schafts (3) des Werkzeugs (D) ausgeführt wird,
wobei das Verfahren **dadurch gekennzeichnet ist, dass**:
das Bohrwerkzeug (D) eine abrasive Stirnfläche (40) besitzt, die im Wesentlichen kugelförmig ausgebildet ist,
dass dem Bohrwerkzeug (D) weiters eine gepulste axiale Bewegung durch die Glasplatte (L) aufgeprägt wird, die eine Folge von Vorwärtsbewegungen umfasst, die sich mit einem Anhalten der Vorwärtsbewegung und/oder Rückwärtsbewegungen abwechseln, und
dass dem Bohrwerkzeug (D) eine motorgetriebene Spindel (109) eines Arbeitskopfs (108) eines elektrisch gesteuerten Bearbeitungszentrums (100) zugeordnet ist, wobei der Arbeitskopf (108) entlang von drei zueinander orthogonalen Richtungen (Y, Y, Z) so bewegt werden kann, dass die axiale Bewegung des Bohrwerkzeugs (D) dadurch erreicht wird, dass der Arbeitskopf (108) entlang einer Achse (Z) der drei orthogonalen Achsen (X, Y, Z) bewegt wird, und die Planetenbewegung des Bohrwerkzeugs (D) dadurch erreicht wird, dass der Arbeitskopf (108) entlang der übrigen beiden Achsen (X, Y) der drei orthogonalen Achsen koordiniert bewegt wird.

## Revendications

1. Dispositif pour former un trou (H) à travers une plaque de verre (L), comprenant un outil de perçage (D) ayant un axe (A), et un dispositif de commande (105, 106, 107, 109, E) pour commander une rotation de l'outil de perçage (D) autour de son axe (A) et pour déplacer simultanément ledit outil de perçage (D) dans la direction dudit axe (A) contre et à travers ladite plaque de verre (L), de manière à former un trou (H) à travers la plaque de verre (L),
ledit dispositif de commande (105, 106, 107, 109, E) étant configuré pour conférer audit outil de perçage (D) également un mouvement planétaire autour d'un axe principal (A1) parallèle à l'axe (A) de l'outil de perçage (D) et espacé de celui-ci,
de sorte que ledit outil de perçage (D) puisse avancer progressivement à travers la plaque de verre (L) au cours du perçage du trou en tournant autour de son axe (A) et en effectuant en même temps un mouvement hélicoïdal résultant de la somme dudit mouvement axial et dudit mouvement planétaire autour dudit axe principal (A1),
dans lequel :
- ledit outil de perçage (D) a une tige axiale (3) et une surface avant abrasive (40),
- ladite tige axiale (3) a également une surface abrasive, ayant toutefois une grosseur de grain plus petite que celle de la surface avant (40) de l'outil de perçage (D), ladite tige axiale (3) étant adaptée pour être engagée contre la surface du trou (H1) dans la plaque de verre (L) après que le trou a été obtenu, afin d'élargir le diamètre du trou,
ledit dispositif étant **caractérisé en ce que** :
- ladite surface avant abrasive (40) a une forme essentiellement sphérique,
- ledit dispositif de commande (105, 106, 107, 109, E) comporte une unité de commande électronique (E) programmée pour conférer à l'outil de perçage (D) un mouvement axial pulsé à travers la plaque de verre, comprenant une succession de mouvements vers l'avant en alternance avec des arrêts et/ou des mouvements vers l'arrière, et **en ce que** ledit dispositif est un centre d'usinage à commande électronique (100) comprenant :
- une surface de travail (103),
- une tête de travail (108) mobile le long de trois directions mutuellement orthogonales (X, Y, Z) au-dessus de la surface de travail (103),
- une broche motorisée (109) prévue sur la tête de travail (108) et portant ledit outil de perçage (D), pour faire tourner l'outil de perçage (D) autour de son axe (A), et
- une unité de commande électronique (E) qui peut être programmée pour commander les mouvements de la tête de travail (108) le long desdits trois axes orthogonaux (X, Y, Z),
- ledit dispositif étant en outre **caractérisé en ce que** ledit mouvement axial de l'outil de perçage (D) est obtenu par le mouvement de ladite tête de travail (108) le long de l'axe (Z) desdits trois axes orthogonaux (X, Y, Z), et le mouvement planétaire de l'outil de perçage (D) est obtenu par les mouvements coordonnés de la tête de travail (108) le long des deux axes restants (X, Y) desdits trois axes orthogonaux.

2. Dispositif selon la revendication 1, **caractérisé en ce que** ladite tige axiale (3) de l'outil de perçage (D) a un renflement d'extrémité (4) qui définit ladite surface avant abrasive (40).

3. Dispositif selon la revendication 2, **caractérisé en ce que** ladite tige axiale (3) a ses extrémités opposées reliées par des surfaces essentiellement coniques (43, 22) audit renflement d'extrémité (4) et à une partie de base (2) du corps de l'outil, et **en ce que** lesdites surfaces essentiellement coniques (43, 22) sont également des surfaces abrasives et peuvent s'engager contre les bords d'extrémité du trou (H) pour former des bords chanfreinés respectifs (S1, S2).

4. Procédé pour former un trou (H) à travers une plaque de verre (L) à l'aide d'un outil de perçage (D) ayant un axe (A), où l'outil de perçage (D) tourne autour de son axe (A) et est déplacé simultanément dans la direction dudit axe (A) contre et à travers ladite plaque de verre (L), de manière à former un trou (H) à travers ladite plaque de verre (L),
dans lequel ledit outil de perçage (D) a une tige axiale (3) ayant un renflement d'extrémité (4) qui définit ladite surface avant abrasive (40) qui est utilisée pour former le trou et en ce que ladite tige axiale (3) a également une surface abrasive, qui a toutefois une grosseur de grain plus petite que celle de la surface avant (40) de l'outil de perçage (D),
dans lequel ledit outil de perçage (D) est animé d'un mouvement planétaire autour d'un axe principal (A1) parallèle à l'axe (A) de l'outil de perçage (D) et espacé de celui-ci,
de sorte que ledit outil de perçage (D) avance progressivement à travers la plaque de verre (L) au cours de la formation du trou, en tournant autour de son axe (A) et en effectuant en même temps un mouvement hélicoïdal résultant de la somme dudit mouvement axial et dudit mouvement planétaire autour dudit axe principal (A1),
dans lequel, après la formation du trou (H1), celui-ci est élargi par une opération de fraisage supplémentaire de la paroi du trou, ladite opération de fraisage étant effectuée en utilisant ladite tige axiale (3) de l'outil (D),
ledit procédé étant **caractérisé en ce que** :
ledit outil de perçage (D) a une surface abrasive avant (40) qui a une forme essentiellement sphérique,
**en ce que** l'outil de perçage (D) est également animé d'un mouvement axial pulsé à travers la plaque de verre (L), comprenant une succession de mouvements vers l'avant en alternance avec des arrêts dans le mouvement vers l'avant et/ou des mouvements vers l'arrière, et
**en ce que** ledit outil de perçage (D) est associé à une broche motorisée (109) d'une tête de travail (108) d'un centre d'usinage à commande électrique (100), où la tête de travail (108) est mobile le long de trois directions mutuellement orthogonales (X, Y, Z) de sorte que ledit mouvement axial de l'outil de perçage (D) soit obtenu par le mouvement de ladite tête de travail (108) le long de l'axe (Z) desdits trois axes orthogonaux (X, Y, Z) et que le mouvement planétaire de l'outil de perçage (D) soit obtenu par les mouvements coordonnés de la tête de travail (108) le long des deux axes restants (X, Y) desdits trois axes orthogonaux.
